# EUROPEAN PATENT SPECIFICATION

(11) **EP 4 229 402 B1**
(45) Date of publication and mention of the grant of the patent: **14.10.2026**
(21) Application number: 21878841.2
(22) Date of filing: 18.10.2021
(51) Int. Cl.: G01N 21/954, B23C 3/00, G02B 23/24

(54) **TESTING OF WELD JOINTS**
PRÜFUNG VON SCHWEISSVERBINDUNGEN
TEST DE JOINTS DE SOUDURE

(30) Priority: 16.10.2020 US 202063092678 P
(43) Date of publication of application: 23.08.2023
(73) Proprietor: MAGNA INTERNATIONAL INC, Aurora, Ontario L4G 7K1 (CA)
(72) Inventor: DENIJS, Eric, Toronto, Ontario M5A 2V6 (CA); PENNER, Pavlo, Brampton, Ontario L6V 3H9 (CA); HENRI, Patrick, Ajax, Ontario L1S 1C9 (CA); DEMELO, Jeff, Barrie, Ontario L4M 0E1 (CA); BONELLO, Mark, Brampton, Ontario L6Z 1W8 (CA)
(74) Representative: Grünecker Patent- und Rechtsanwälte PartG mbB
(86) International application number: PCT/CA2021/051461
(87) International publication number: WO 2022/077124

(56) References cited:
- WO-A1-2020/000083
- CN-A- 110 208 389
- JP-A- 2008 111 751
- JP-A- 2010 002 459
- JP-A- 2011 185 629
- JP-B2- 4 182 589
- US-A- 5 654 795
- US-A1- 2015 328 721
- US-A1- 2018 001 422
- US-A1- 2018 001 422
- US-A1- 2018 147 647
- US-A1- 2019 360 945
- US-B2- 9 501 821
- CHEN W ET AL: "CO"2 laser welding of galvanized steel sheets using vent holes", MATERIALS AND DESIGN, LONDON, GB, vol. 30, no. 2, 1 February 2009 (2009-02-01), pages 245 - 251, XP025406617, ISSN: 0261-3069, [retrieved on 20080912], DOI: 10.1016/J.MATDES.2008.05.009
- FRANCIS J A ET AL: "Vacuum laser welding of SA508 steel", JOURNAL OF MATERIALS PROCESSING TECHNOLOGY, ELSEVIER, NL, vol. 274, 18 June 2019 (2019-06-18), XP085749006, ISSN: 0924-0136, [retrieved on 20190618], DOI: 10.1016/J.JMATPROTEC.2019.116269
- BENEDETTI M ET AL: "Crack growth resistance of MAG butt-welded joints of S355JR construction steel", ENGINEERING FRACTURE MECHANICS, ELSEVIER, AMSTERDAM, NL, vol. 108, 8 February 2013 (2013-02-08), pages 305 - 315, XP028686059, ISSN: 0013-7944, DOI: 10.1016/J.ENGFRACMECH.2013.01.019

## Description

### BACKGROUND OF THE INVENTION

### 1. Field of the Invention

The present invention is related generally to a process of testing weld joints.

### 2. Related Art

When manufacturing large volumes of automotive parts, it is often necessary to periodically conduct destructive testing of weld joints to ensure that those weld joints meet strength and durability requirements. One known process of testing weld joints involves plasma cutting the welded product into smaller pieces then abrasive saw cutting each weld joint and extracting a coupon of the weld joint and analyzing that coupon in a laboratory setting. This process can be very resource and time consuming. For example, it may take multiple days from the time the coupon is cut out of the weld joint until the analysis of the coupon is completed. Such a long turn-around time can may require the part manufacturer to store multiple days' worth of inventory until the verification is completed before shipping it to a customer. Further relevant prior art is described in JP 2008 111751 A, US 2019/360945 Al, JP 2011 185629 A, CHEN W ET AL: "CO"2 laser welding of galvanized steel sheets using vent holes", MATERIALS AND DESIGN, LONDON, GB, vol. 30, no. 2, 1 February 2009, pages 245-251, FRANCIS J A ET AL: "Vacuum laser welding of SA508 steel", JOURNAL OF MATERIALS PROCESSING TECHNOLOGY, ELSEVIER NL, vol. 274, 18 June 2019 and BENEDETTI M ET AL: "Crack growth resistance of MAG butt-welded joints of S355JR construction steel", ENGINEERING FRACTURE MECHANICS, ELSEVIER, AMSTERDAM, NL vol. 108, 8 February 2013, pages 305-315.

There is a continuing need for an improved weld verification process which is less time and labor consuming.

### SUMMARY OF THE INVENTION

In particular, there is provided a method of testing a weld joint the method has the features defined in claim 1. Further preferred embodiments are defined in the dependent claims.

### BRIEF DESCRIPTION OF THE DRAWINGS

These and other features and advantages of the invention will become more readily appreciated when considered in connection with the following description of the presently preferred embodiments, appended claims and accompanying drawings, in which:
Figure 1 is a top elevation view of an exemplary embodiment of a vehicle subframe that includes a plurality of weld joints;
Figure 2 is an enlarged view of a portion of the subframe of Figure 1;
Figure 3 is an image taken of a cross-section of one of the weld joints of the subframe of Figure 1;
Figure 4 illustrates a CNC milling machine forming a plurality of port holes into the subframe of Figure 1;
Figure 5 shows a portable microscope being used to capture one or more images of one of the weld joints through a port hole formed into the subframe of Figure 1;
Figure 6 also shows the portable microscope being used to capture images of a weld joint and also schematically illustrates the structure of a probe that is fixedly attached with the portable microscope;
Figure 7 shows a cross-sectional diagram of the portable microscope;
Figure 8 illustrates an etching operation being conducted on one of the port holes of the subframe of Figure 1; and
Figure 9 is a flow chart illustrating the steps of an exemplary embodiment of a process for analyzing a weld joint.

### DESCRIPTION OF THE ENABLING EMBODIMENT

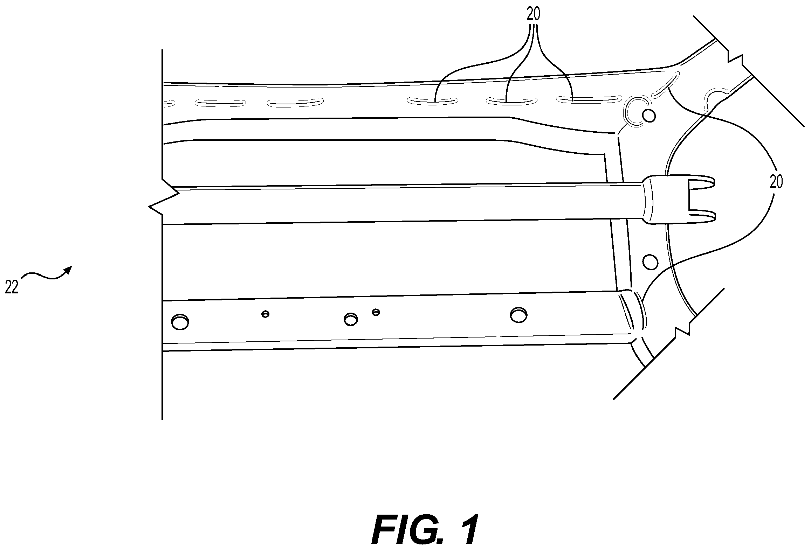

Referring to the Figures, wherein like numerals indicate corresponding parts throughout the several views, the present invention is related generally to the inspection of weld joints **20** such as the weld joints **20** on the vehicle subframe **22** shown in Figure 1. While the exemplary embodiment shows a vehicle subframe **22,** the part with the weld joints **20** to be analyzed could be a wide range of different automotive or non-automotive components and may be made of any suitable type of material for example, various steels, alloy steels, aluminum alloys, etc.). The weld joints **22** may be formed through any suitable type of welding operation (for example, gas metal arc welding [GMAW or MIG], tungsten inert gas [TIG] welding, laser welding, etc.). The part may also have any suitable number of weld joints **20** to be analyzed.

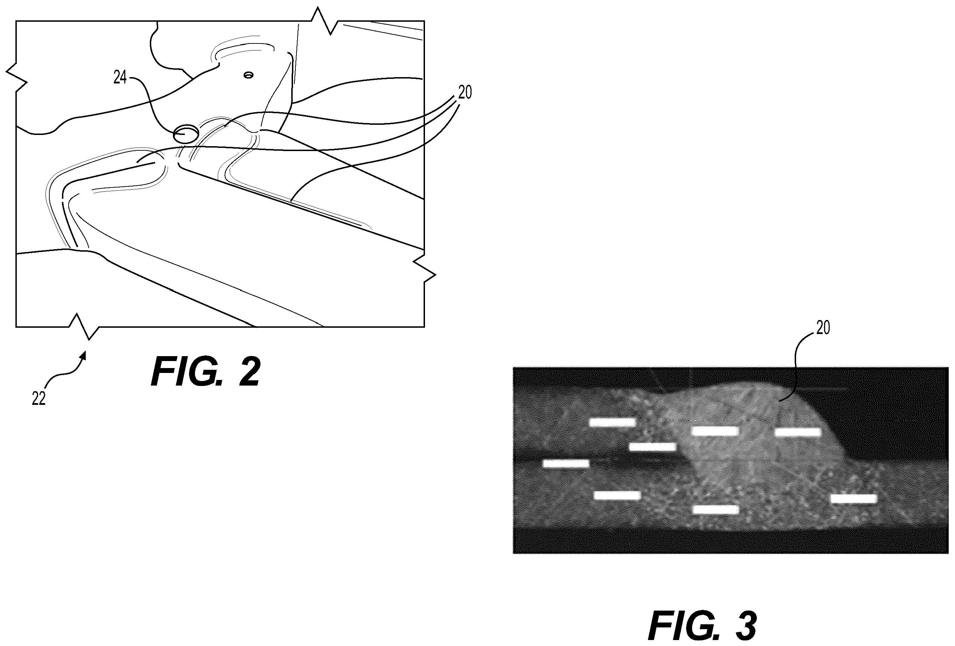

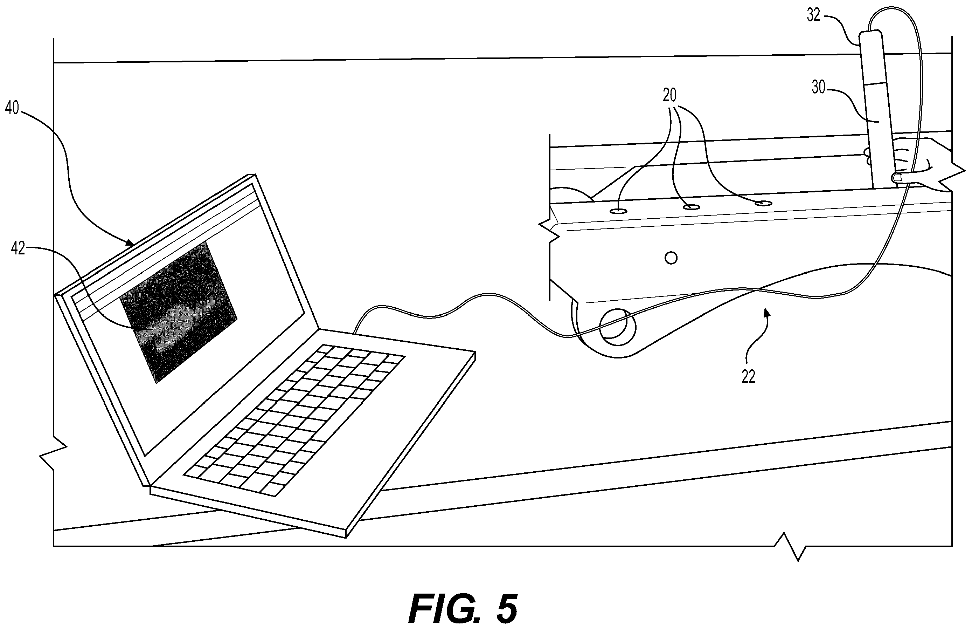

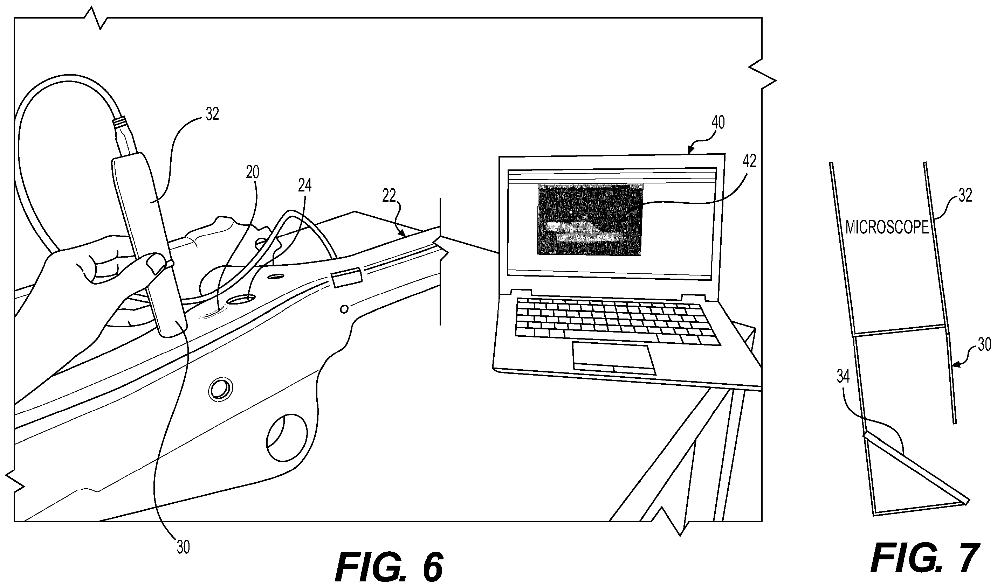

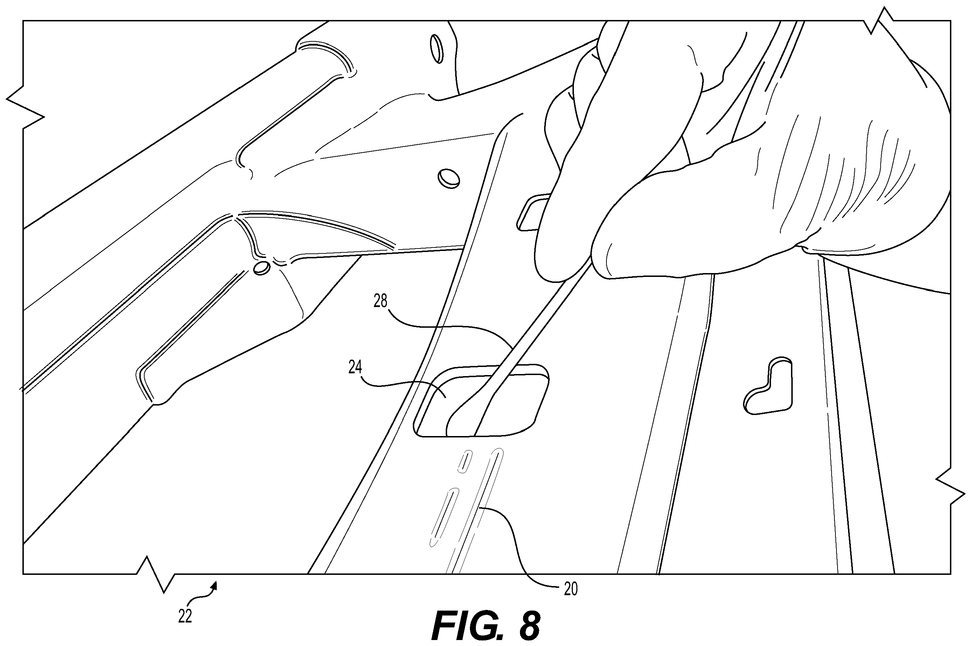

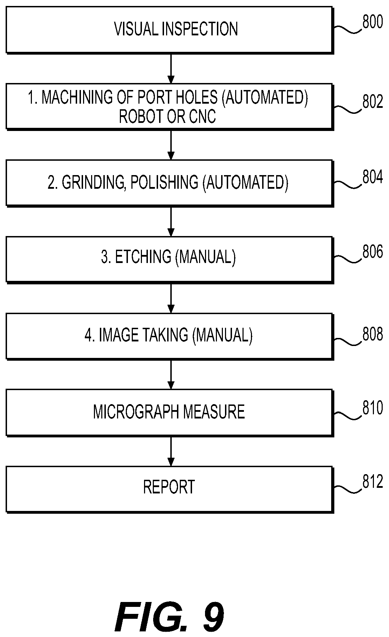

Figure 9 is a flow chart depicting the steps of an example method of analyzing a weld joint **20,** such as any one or more of the weld joints **20** found on the subframe **22** shown in Figures 1-8. At step **800,** a visual inspection is conducted on the weld joint **20** to look for visible problems with the weld joint **20.** The visual inspection may be performed either automatically using a camera or some other imaging device or it may be performed manually.

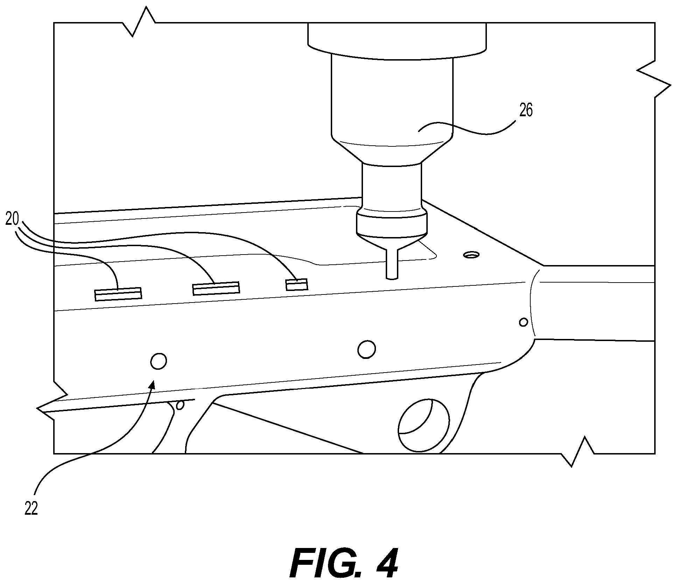

At step **802,** a plurality of port holes **24** are automatically machined into at least the part using an automated machining means, such as the computer numerical control (CNC) milling machine **26** shown in Figure 4. The CNC milling machine **26** is pre-programmed to automatically machine the port holes **24** at specific locations that correspond with the weld joints **20** to be analyzed. Each port hole **24** extends all the way through the respective weld joint **20** so that the full thickness of the weld joint **20** can be analyzed. In the exemplary embodiment, each port hole **24** is generally square in shape and measures approximately 25 mm X 25 mm. After each port hole **24** is formed into the weld joint **20,** a tool on the CNC milling machine **26** is changed, and the CNC milling machine **26** makes a final finishing pass at a slow speed than what was used to initially form the port hole **24.** This finishing process improves a surface finish of an inner surface of the port hole **24.**

At step **804,** the inner surface of the port hole **24** is automatically grinded and polished to further improve the surface finish of the inner surface of the port hole **24.** Step **804** may be performed by the aforementioned CNC milling machine **26** or a different grinding and polishing means. In some embodiments, step **804** may be omitted where step **802** provides a satisfactory surface finish for analyzing the weld joint **20.**

According to the claimed invention at step **806,** a portion of the inner surface the port hole 24 is etched to increase contrast between a weld joint **20** and a base metal so that weld dimensions can be measured. According to the present invention the etching process involves soaking a cotton swab **28** in Nital (a mixture of ethanol and nitric acid) and applying the Nital in a localized portion of the inner surface of the port hole **24.** In other words, the Nital is not applied to the entire inner surface of the port hole **24.** The use of the cotton swab **28** has been found to minimize the amount of Nital necessary to sufficiently etch the weld joint **20.**

At step **808,** a probe **30** of a portable microscope **32** is inserted into the port hole **24,** and one or more images of the inner surface of the port hole **24** is/are captured for analysis. In the exemplary embodiment, the probe **30** includes a mirror **34** which is angled at a forty-five degree (45°) angle relative to a lens of the microscope **32** and faces an opening in the probe **30.** In operation, the opening in the probe **30** is pointed at the portions of the inner surface of the port hole **24** to be analyzed. The mirror **34** reflects an image of the inner surface of the port hole **24** by ninety degrees (90°) to the microscope **32,** thereby allowing to take an image of a weld section through a small port hole **24** that is smaller than a size of the microscope **32** when imaging the weld joint **20.** The mirror allows the lens of the microscope **32** to remain parallel to the welded surface of the part **22.** In some embodiments, the microscope **32** is linked with a computer **40** via an USB cable. The computer **40** may display images **42,** provided from the microscope **32.** The computer **40** may provide a live video feed of the images from the microscope **32.** Alternatively or additionally, still images may be displayed. Other wired or wireless data transmission means may be employed to transmit the images from the microscope **32** to any device which will allow a user to analyze the images, e.g., a computer, a tablet, etc. In some embodiments, the images **42,** which may include video and/or still images, may be stored for future use. At step **810,** measurement is taken of the weld joint **20** using one or more of the images. At step **812,** the results of the analysis are reported. In the exemplary embodiment, the probe **30** is made through a 3D printing operation. However, other manufacturing means may alternately be employed.

The entire process discussed above takes substantially less time and resources than other known destructive weld analysis procedures with no drawbacks. This may significantly reduce the amount of parts that must be held by a part manufacturer prior to shipping those parts to a customer, thereby providing savings to the part manufacturer.

## Claims

1. A method of testing a weld joint (20), comprising: preparing a part that includes at least one weld joint (20) which joins at least two metal components with one another; machining at least one hole in the at least one weld joint (20); inserting, into the at least one port hole (24), a probe (30) that includes a mirror (34) attached to a camera; and reflecting an image of the weld joint (20) off of the mirror (34) and to the camera while the probe (30) is inserted into the at least one port hole (24), wherein the method further including etching an inner surface of the at least one port hole (24) prior to inserting the probe (30) into the at least one port hole (24), the method **characterized in that** etching the inner surface of the at least one port hole (24) includes applying Nital to the inner surface, wherein the Nital is applied to the inner surface of the at least one port hole (24) using a cotton swab (28), wherein the Nital is applied to only a portion of the inner surface of the at least one port hole (24).

2. The method as set forth in claim 1, wherein machining the at least one port hole (24) in the at least one weld joint (20) involves the use of a first tool to initially form the at least one port hole (24) and the use of a second tool to perform a finishing pass around the at least one port hole (24) to improve a surface finish of an inner surface of the port hole (24).

3. The method as set forth in claim 1, wherein the step of machining the at least one port hole (24) in the at least one weld joint (20) is using a computer numerical control (CNC) milling machine (26).

4. The method as set forth in claim 3, wherein the step of machining at least one port hole (24) in the at least one weld joint (20) further includes machining a plurality of port holes (24) into a plurality of weld joints (20).

5. The method as set forth in claim 1, wherein the probe (30) has a sidewall with an opening and wherein the mirror (34) faces the opening and is angled relative to the camera such that, in use, the image enters the probe (30) through the opening and is reflected off the mirror (34) towards the camera.

6. A method of analyzing a weld joint (20), comprising the method of any of the foregoing claims, and further comprising capturing the image with the camera; and analyzing the weld joint (20) using the image captured by the camera.

## Patentansprüche

1. Verfahren zum Prüfen einer Schweißverbindung (20), umfassend: Vorbereiten eines Bauteils, das mindestens eine Schweißverbindung (20) umfasst, die mindestens zwei Metallkomponenten miteinander verbindet; maschinelles Bearbeiten mindestens einer Durchgangsöffnung (24) in der mindestens einen Schweißverbindung (20); Einführen einer Sonde (30), die einen an einer Kamera befestigten Spiegel (34) umfasst, in die mindestens eine Durchgangsöffnung (24); und Reflektieren eines Bildes der Schweißverbindung (20) an dem Spiegel (34) zu der Kamera, während die Sonde (30) in die mindestens eine Durchgangsöffnung (24) eingeführt ist, wobei das Verfahren ferner das Ätzen einer Innenfläche der mindestens einen Durchgangsöffnung (24) vor dem Einführen der Sonde (30) in die mindestens eine Durchgangsöffnung (24) umfasst, wobei das Verfahren **dadurch gekennzeichnet ist, dass** das Ätzen der Innenfläche der mindestens einen Durchgangsöffnung (24) das Aufbringen von Nital auf die Innenfläche umfasst, wobei das Nital unter Verwendung eines Wattestäbchens (28) auf die Innenfläche der mindestens einen Durchgangsöffnung (24) aufgebracht wird, wobei das Nital nur auf einen Teil der Innenfläche der mindestens einen Durchgangsöffnung (24) aufgebracht wird.

2. Verfahren nach Anspruch 1, wobei das maschinelle Bearbeiten der mindestens einen Durchgangsöffnung (24) in der mindestens einen Schweißverbindung (20) die Verwendung eines ersten Werkzeugs zum anfänglichen Herstellen der mindestens einen Durchgangsöffnung (24) und die Verwendung eines zweiten Werkzeugs zum Durchführen eines Schlichtdurchgangs entlang der mindestens einen Durchgangsöffnung (24) umfasst, um die Oberflächengüte einer Innenfläche der Durchgangsöffnung (24) zu verbessern.

3. Verfahren nach Anspruch 1, wobei der Schritt des maschinellen Bearbeitens der mindestens einen Durchgangsöffnung (24) in der mindestens einen Schweißverbindung (20) unter Verwendung einer CNC-Fräsmaschine (26) mit numerischer Computersteuerung erfolgt.

4. Verfahren nach Anspruch 3, wobei der Schritt des maschinellen Bearbeitens mindestens einer Durchgangsöffnung (24) in der mindestens einen Schweißverbindung (20) ferner das maschinelle Bearbeiten einer Vielzahl von Durchgangsöffnungen (24) in einer Vielzahl von Schweißverbindungen (20) umfasst.

5. Verfahren nach Anspruch 1, wobei die Sonde (30) eine Seitenwand mit einer Öffnung aufweist und wobei der Spiegel (34) der Öffnung zugewandt und relativ zur Kamera derart abgewinkelt ist, dass bei Gebrauch das Bild durch die Öffnung in die Sonde (30) eintritt und an dem Spiegel (34) in Richtung der Kamera reflektiert wird.

6. Verfahren zur Analyse einer Schweißverbindung (20), umfassend das Verfahren gemäß einem der vorstehenden Ansprüche und ferner umfassend das Erfassen des Bildes mit der Kamera sowie das Analysieren der Schweißverbindung (20) unter Verwendung des von der Kamera erfassten Bildes.

## Revendications

1. Procédé de test d'un joint de soudure (20), comprenant les étapes consistant à : préparer une pièce qui comprend au moins un joint de soudure (20) qui relie au moins deux composants métalliques l'un à l'autre ; usiner au moins un orifice dans le au moins un joint de soudure (20) ; insérer, dans le au moins un orifice (24), une sonde (30) qui inclut un miroir (34) fixé à une caméra ; et réfléchir une image du joint de soudure (20) à partir du miroir (34) et jusque sur la caméra tandis que la sonde (30) est insérée dans le au moins un orifice (24), dans lequel le procédé inclut en outre l'étape consistant à graver une surface intérieure du au moins un orifice (24) avant d'insérer la sonde (30) dans le au moins un orifice (24), le procédé étant **caractérisé en ce que**
la gravure de la surface intérieure du au moins un orifice (24) inclut une application de Nital sur la surface intérieure, le Nital étant appliqué sur la surface intérieure du au moins un orifice (24) en utilisant un coton-tige (28), le Nital n'étant appliqué que sur une partie de la surface intérieure du au moins un orifice (24).

2. Procédé selon la revendication 1, dans lequel l'usinage du au moins un orifice (24) dans le au moins un joint de soudure (20) implique l'utilisation d'un premier outil pour former initialement le au moins un orifice (24) et l'utilisation d'un second outil pour effectuer une passe de finition autour du au moins un orifice (24) afin d'améliorer une finition de surface d'une surface intérieure de l'orifice (24).

3. Procédé selon la revendication 1, dans lequel l'étape d'usinage du au moins un orifice (24) dans le au moins un joint de soudure (20) utilise une fraiseuse (26) à commande numérique par ordinateur (CNC).

4. Procédé selon la revendication 3, dans lequel l'étape d'usinage d'au moins un orifice (24) dans le au moins un joint de soudure (20) inclut en outre un usinage d'une pluralité d'orifices (24) dans une pluralité de joints de soudure (20).

5. Procédé selon la revendication 1, dans lequel la sonde (30) présente une paroi latérale avec une ouverture et dans lequel le miroir (34) fait face à l'ouverture et est incliné par rapport à la caméra de telle sorte qu'en utilisation, l'image pénètre dans la sonde (30) à travers l'ouverture et est réfléchie par le miroir (34) vers la caméra.

6. Procédé d'analyse d'un joint de soudure (20), comprenant le procédé selon l'une quelconque des revendications précédentes, et comprenant en outre une capture de l'image avec la caméra ; et une analyse du joint de soudure (20) en utilisant l'image capturée par la caméra.
